# EUROPEAN PATENT APPLICATION

(11) **EP 4 541 544 A1**
(43) Date of publication of application: **23.04.2025**
(21) Application number: 24205520.0
(22) Date of filing: 09.10.2024
(51) Int. Cl.: B29B 17/02

(54) **TREATMENT METHOD FOR POST-CONSUMER ABSORBENT SANITARY ARTICLES**

(30) Priority: 20.10.2023 IT 202300021921
(71) Applicant: I-Foria Italia S.r.l., 65122 Pescara (IT)
(72) Inventor: SOMMA, Marcello, 65122 Pescara (IT); LANDOLFO, Giuseppe, 65122 Pescara (IT); CIAMBELLI, Paolo, 65122 Pescara (IT)
(74) Representative: Mola, Edoardo

(57) **Abstract**

A method for processing post-consumer absorbent sanitary products comprising the steps of performing treatments, including drying the products in a first facility, and carrying out further treatments, such as refinement, in a second facility located at a distance from the first facility.

## Description

### FIELD OF THE INVENTION

The present invention relates to a method for treating absorbent hygienic products, more specifically to the recovery of materials from post-consumer absorbent hygienic products contaminated by organic compounds resulting from human or animal metabolic processes, e.g., pets such as cats.

### STATE OF THE ART

Post-consumer absorbent hygienic products are typically disposed of without achieving satisfactory recycling rates for materials such as cellulose-based materials and thermoplastics. Moreover, there is a recognized need to enhance the efficiency of disposal facilities, increase the value of secondary raw materials produced, and reduce the size of these facilities to facilitate their installation, thereby promoting the recycling of post-consumer absorbent products and reducing the environmental impact of their lifecycle.

### OBJECTIVES AND BRIEF SUMMARY OF THE INVENTION

The objective of the present invention is to provide a method for recycling post-consumer absorbent hygienic products, which comprises the following steps:
- In a first facility: shredding, drying, and sterilizing a load of said absorbent hygienic products comprising a superabsorbent polymer e.g., sodium or potassium polyacrylate, or a biodegradable variant to produce a shredded and dried semi-finished product.
   Separating, not necessarily in the first facility, the shredded and dried semi-finished product to obtain a first semi-finished product based on cellulose with superabsorbent polymer and a second semi-finished product based on plastic;
- In a second facility, improving the physico-chemical properties of the first semi-finished product and transforming it into a finished product, e.g., suitable for resale and integration into the production process of another product, either in the personal absorbent products sector or other industrial sectors such as detergents, paper mills, and others.

According to the invention, the first facility carries out a relatively simple process, has relatively smaller dimensions, involves lower implementation costs, and can be built in relatively urbanized areas, allowing for collection and processing close to the sites where post-use absorbent hygienic products are produced. Additionally, transporting the semi-finished product after drying and sterilization is significantly easier because treatments like sterilization and drying in the first facility considerably reduce the specific density of the semi-finished products and the environmental impact of the incoming post-consumer absorbent hygienic products.

Specifically, during these processes, the amounts or concentrations of pathogenic biological agents, such as *E. coli* and/or *Salmonella,* as well as drug metabolites, are reduced below pre-determined thresholds, for instance, as set by national laws. In some national regulations, the products entering the first facility are classified as waste, whereas the first semi-finished product complies with the requirements to no longer be classified as waste.

This facilitates transportation between the first and second facilities, whose efficiency is also increased because water has already been removed during the drying process.

It should also be noted that cellulose valorisation processes, to be economically viable, require large-scale operations and high saturation levels.

In particular, valorisation processes include at least one of the following:
- Separating the superabsorbent polymer (SAP) from cellulose; or
- A chemical process, such as:
   ∘ Producing crystalline cellulose, e.g., through acid hydrolysis;
   ∘ Depolymerizing the SAP, for instance, by using at least 10 kg of a 20% by volume aqueous hydrogen peroxide solution, heated relative to ambient temperature e.g., to 80°C, for every kilogram of dried cellulose with SAP. For example, the treatment lasts 1 hour.
   ∘ Obtaining carboxymethyl cellulose.

These process alternatives, which take place in the second facility, are known and can be carried out in plants designed to benefit from economies of scale, thus having relatively large dimensions. The second facility is typically located farther from urban centres, where larger spaces are available, and it can receive batches of the first semi-finished product from multiple first facilities. Additionally, the aforementioned process alternatives enhance the value of the cellulose-based semi-finished product, allowing it to achieve a higher market price.

In a preferred embodiment, the separation step is performed either in the first or the second facility as an alternative.

In another preferred embodiment, the following steps are performed, preferably at the second facility:
- Receiving the second semi-finished product.
- Performing at least one of the following operations: adding one or more dyes; adding a filler based on a polymer with a purity higher than that of the second semi-finished product; adding a mineral filler of fibres, and/or particles; or densifying by degassing, e.g., to achieve a minimum density of no less than 800 kg/m³.

Further processing of the plastic semi-finished product increases the reuse rate of post-consumer absorbent products. Moreover, also in this case, both processes enhance the value of the second semi-finished product, enabling it, also in this case, to reach higher market prices and be used either in the personal absorbent products sector or other industries, such as footwear, furniture, or automotive. Alternatively, densification without extrusion, potentially combined with a degassing step, can produce amorphous plastic granules suitable for simpler plastic products.

It should be noted that densification requires heating, either through an external heat source or by friction of the second semi-finished product, this heating can either reach the melting temperature or remain below it.

### BRIEF DESCRIPTION OF THE DRAWINGS

The invention is described below based on non-limiting examples, illustrated by way of example in the following figure. The figure refers to a schematic representation of the initial process steps carried out in a first facility and subsequent process steps performed in a second facility located at a distance from the first, in accordance with the invention.

### DETAILED DESCRIPTION OF THE INVENTION

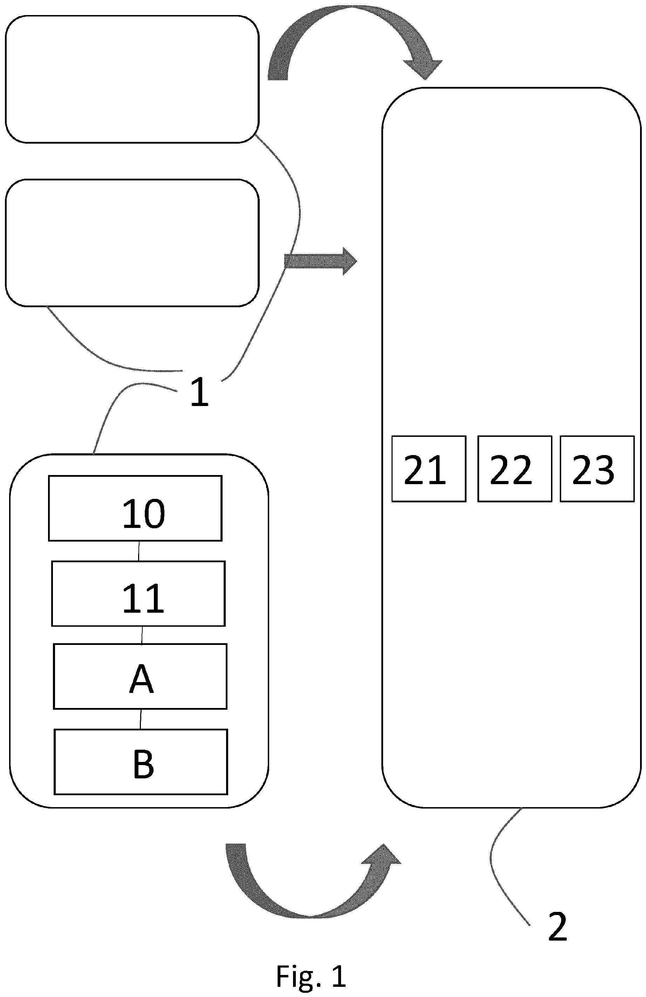

Figure 1 schematically illustrates a first facility 1, preferably constructed in an urban area, to quickly and efficiently collect post-consumer absorbent hygienic products contaminated by organic compounds derived from human and animal metabolism e.g., pets such as cats, and a facility 2 is shown, preferably located in an area with a lower population density than the facility 1 configured to receive a first, and preferably a second, semi-finished product generated from multiple first facilities 1 situated in different locations, typically within a radius of no more than 500 kilometers from the facility 2.

A facility, as defined here, refers to a demarcated plot of land e.g., enclosed by a fence or perimeter wall with an access gate, inside the enclosure, there is a building where at least some of the processes described below are carried out, along with parking spaces for employees and loading/unloading of goods. Preferably, a facility according to this invention has its own postal code, and the first and second facilities have different postal codes.

Post-consumer absorbent hygienic products are defined as, for example, baby diapers, adult diapers, incontinence pads, sanitary napkins, bed pads, sheets, mattress covers, and absorbent materials for cat litter, such as pads and hygiene bags for animals. These products typically comprise absorbent materials made of cellulose and superabsorbent polymers (SAP), e.g., sodium or potassium polyacrylate, or biodegradable SAPs. They also comprise layers of thermoplastic materials.

Animal Pads are defined as pre-assembled items consisting of a layer of superabsorbent material between two plastic films, designed to be placed, for example, in a litter box.

Animal Hygiene Bags are defined as packages containing superabsorbent material in flake form to be poured into a litter box, e.g. similarly to how traditional litter is used.

The facility 1 executes operations on loads of post-consumer absorbent hygienic products to simplify transportation such as sterilization A and drying B.

Sterilization A **is** preferably carried out in an autoclave at a temperature of 121°C or higher. Moreover, preferably following sterilization, drying B is conducted using hot air flows to achieve an output semi-finished product with a moisture content of 15% by weight or less, preferably between 10% and 5%.

Before sterilization A and drying B, a preliminary shredding 10 step is typically performed on the load of post-consumer absorbent hygienic products, as received from separate collection stations. Shredding 10 is preferably carried out using a single-rotor shredder with a specific grid or a dual-shaft shredder followed by a single-rotor shredder. The shredded plastic output has a maximum particle size of less than 8 cm, preferably in the range of 4 to 6 cm.

Separation 11, which follows sterilization A and drying B, may be conducted, according to a non-limitative example, using a pair of centrifugal separators arranged in series in the plastic material flow in order to obtain a polyolefin purity (PP and PE) of 80% or more, a non-polyolefin material content by weight of less than 20%, a moisture content of less than 10%. This separation effectively divides the cellulose with SAP from the plastic materials.

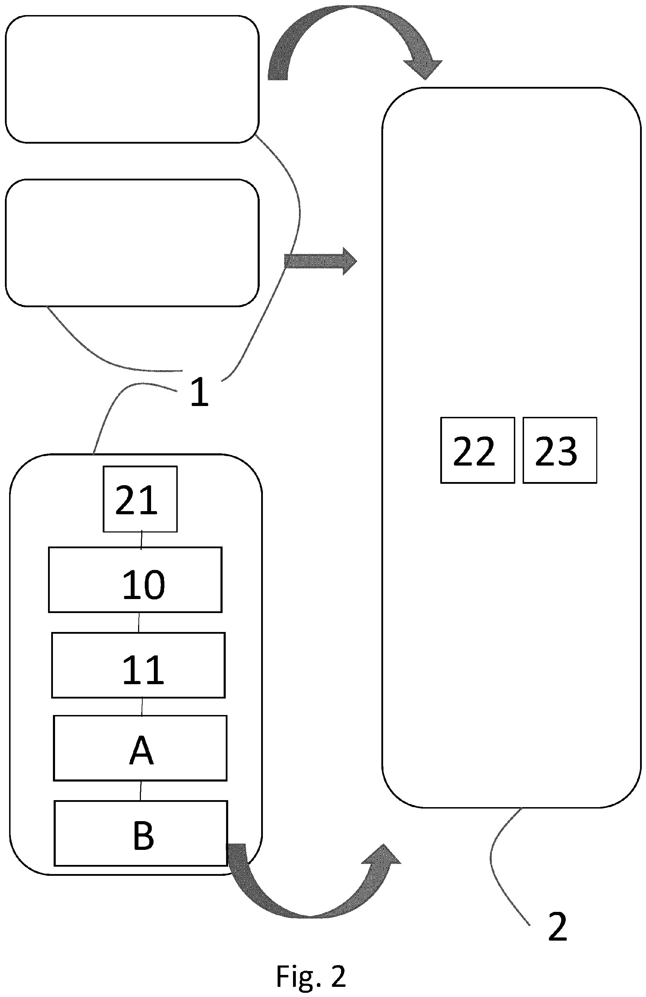

In an alternative embodiment (Figure 2), the first facility also includes a separation machine to separate the dried and sterilized cellulose-based material from the superabsorbent polymer (SAP), which is also dried and sterilized. This separation step 21 occurs after the initial separation 11 between the cellulose and SAP-based material and the plastic material. For instance, it is possible to use one or more centrifugal separators arranged in series, followed by an air classifier to enhance the purity of the materials, such as dried cellulose separated from SAP and dried SAP. In this way it is possible to obtain, for example, low-SAP-content cellulose e.g., SAP content < 5% by weight; and/or high-SAP-content cellulose e.g., SAP content < 40% by weight; and/or SAP with a purity of 80-95%, containing 5-20% cellulose and trace amounts of plastic residues.

Depending on national regulations, these output products from the first facility can be transported without being classified as waste.

In an alternative embodiment not illustrated, the separation step 11 for obtaining plastic material is performed as a first step in the second facility 2 or elsewhere, rather than in the first facility 1.

In the embodiment shown in Figure 1, multiple facilities 1 produce a cellulose-based semi-finished product containing superabsorbent polymer and a second semi-finished product consisting of plastic material for the facility 2 for further processing and refinement. In another unillustrated embodiment, the cellulose-based semi-finished product could be valorised in one dedicated facility, while the plastic-based semi-finished product is valorised in a separate facility.

Transportation between facilities 1 and 2 is conducted via manned or unmanned vehicles traveling by road, rail, waterways e.g., navigable canals, or air e.g., drones.

As illustrated in Figure 1, the facility 2 processes in a non-limitative way both types of semi-finished products. Regarding the cellulose-based semi-finished product, the following processes may be performed:
- A chemical process.
- When not performed at the first facility, a separation process 21 for cellulose and SAP based material, for example using the methods previously described.

Examples of Chemical Processes:
- Production of Crystalline Cellulose (22), for example via acid hydrolysis, for example:
   ∘ microcrystalline cellulose production.
   ∘ Nanocellulose production in the form of nanocrystals via acid hydrolysis. The quality of the cellulose in the semi-finished product allows for milder processing conditions, e.g., without pretreatment and using a different pH compared to the typical use of 65% sulfuric acid by weight.
   ∘ Production of Crystalline Nanofibers: achieved through mechanical treatment, or ultrasonic processing, or pressurized electrospinning to overcome the insolubility of cellulose.
   ∘ Production of Carboxymethyl Cellulose (CMC) or Other Biodegradable Polymers (23) Based on cellulose, for example by way of dispersing cellulose in alkali, followed by treatment with monochloroacetic acid to replace hydroxyl groups on glucose at O-2, O-3, or O-6 positions, and washing the cellulose by way of depolymerizing SAP and converting SAP into biodegradable SAP based on cellulose.
      In the embodiment illustrated in Figure 1, the facility 2 also processes the second semi-finished product using at least one of the following methods:
   ∘ Compounding 31 by adding mineral fillers such as clay or zeolites, of fibres/particles e.g., for printable or mouldable crystalline cellulose-epoxy resin composites, and polymers of higher purity than the second semi-finished product, followed by extrusion; or
   ∘ Wet Agglomeration of microcrystalline cellulose, followed by extrusion and degassing to produce granules, tablets, and pellets with controlled porosity and morphology.
   ∘ Production of Cellulose-Based Inks for 3D printing, followed by scaffold densification for biomedical applications.
   ∘ Production of All-Cellulose Composites (ACC) by way of partially dissolving cellulose fibres using ionic liquids and regenerating them by solvent exchange.

Degassing, optionally performed after compounding, removes unwanted gaseous components and reduces the porosity of the resulting granules, thus obtaining a recycled material suitable for reuse. For example, a polyolefinic material (PP or PE) can be obtained with polyolefin purity exceeding 80%, non-polyolefin plastic content < 20%, moisture content < 10%.

For example, the granules /pellets obtained have the following characteristics:

| Parameter | TM | U.M. | Target | Limits |
|---|---|---|---|---|
| MFR @ 190°C | ASTM D 1238 | g/10' | ≥ 3 | ≥ 1 |
| MFR @ 230°C | ASTM D 1238 | g/10' | ≥ 6 | ≥ 3 |
| Base Humidity (out extruder) | Hygrometer | % | < 1 | < 3 |
| Final humidity (out dryer) | Hygrometer | % | < 0, 1 | < 1 |

Artifacts (dog bone specimens) with extruded

| Parameter | TM | U.M. | Target | Limits |
|---|---|---|---|---|
| Tensile strength | ISO 527-2 | MPa | TBD | > 13 |
| Tensile modulus of elasticity | ISO 527-2 | MPa | TBD | > 900 |

## Claims

1. Method for Recycling Post-Consumer Absorbent Hygiene Products, comprising the steps of:
In a first facility (1):
• Receiving a load of said hygiene products comprising an absorbent layer based on a superabsorbent polymer and cellulose;
• Shredding (10), drying (B), and sterilizing (A) the load to obtain a shredded semi-finished product;
• Separating (11) the shredded, dried, and sterilized semi-finished product to obtain a first semi-finished product based on cellulose with superabsorbent polymer and a second semi-finished product based on plastic;
In a second facility (2):
Performing at least one of the following operations on the first semi-finished product:
• Producing crystalline cellulose (22), preferably through acid hydrolysis;
• Producing carboxymethyl cellulose and a biodegradable superabsorbent polymer based on cellulose.
• Separating (21) the superabsorbent polymer from the cellulose to obtain a cellulose with superabsorbent polymer residues below 10% by weight.

2. Method according to claim 1, wherein the separation step (11) to obtain the first and second semi-finished products is carried out either in the first facility (1) or in the second facility (2).

3. Method according to any of the preceding claims, further comprising the following steps, preferably carried out in the second facility (2):
• Receiving the second semi-finished product;
• Performing at least one of the following: adding a filler or densifying, e.g., to achieve a minimum moisture content below 10% by weight, preferably below 5% by weight.

4. Method according to any of the preceding claims, comprising the step of transporting said load via a vehicle along a road and/or railway and/or waterway and/or airway.

5. Method according to any of the preceding claims, wherein the first facility (1) is located in a first area with a first population density, and the second facility (2) is located in a second area with a second population density, with the first population density being higher than the second population density.

6. Method according to any of the preceding claims, wherein the step of producing crystalline cellulose comprises at least one of the following: a phase for producing microcrystals and/or a phase for producing cellulose nanocrystals for example through acid hydrolysis, and/or a phase for producing crystalline cellulose nanofibers.
